# EUROPÄISCHE PATENTSCHRIFT

(11) **EP 2 737 222 B1**
(45) Veröffentlichungstag und Bekanntmachung des Hinweises auf die Patenterteilung: **07.10.2015**
(21) Anmeldenummer: 12737575.6
(22) Anmeldetag: 23.07.2012
(51) Int. Cl.: F16B 37/04

(54) **EINSTECKMUTTER**
SPEED NUT
ECROU À ENCASTRER

(30) Priorität: 29.07.2011 DE 102011108934
(43) Veröffentlichungstag der Anmeldung: 04.06.2014
(73) Patentinhaber: A. RAYMOND et Cie, 38000 Grenoble (FR)
(72) Erfinder: HAUSER, Ingo, 79400 Kandern (DE)
(74) Vertreter: RACKETTE Patentanwälte PartG mbB
(86) Internationale Anmeldenummer: PCT/EP2012/064386
(87) Internationale Veröffentlichungsnummer: WO 2013/017453

(56) Entgegenhaltungen:
- DE-A1- 3 921 733
- DE-A1-102009 030 040
- DE-C1- 19 652 874
- US-A- 4 840 522

## Beschreibung

Die Erfindung betrifft eine Einsteckmutter gemäß dem Oberbegriff des Patentanspruches 1.

Eine derartige Einsteckmutter ist aus DE 196 52 874 C1 bekannt. Die vorbekannte Einsteckmutter weist einen Kopfteller auf, der mit einer Einführausnehmung ausgebildet ist. Weiterhin ist ein an den Kopfteller angeformter länglicher geschlossener Fußschaft vorhanden, der wenigstens eine Rastnase aufweist, die in radialer Richtung über einen Mittenabschnitt des Fußschaftes übersteht. Der Fußschaft ist weiterhin mit einem sich in Längsrichtung erstreckenden Schraubenaufnahmeraum ausgebildet. Der Schraubenaufnahmeraum ist bis auf die Einführausnehmung geschlossen und aus einem hartelastischen Kunststoffmaterial hergestellt. Die Rastnase ist als Vorsprung an einer den Schraubenaufnahmeraum umschließenden Wandung angeformt.

Aus DE 10 2009 030 040 A1 ist eine Einsteckmutter mit einem eine Einführausnehmung aufweisenden Kopfteller und mit einem an den Kopfteller angeformten länglichen geschlossenen Fußschaft bekannt, an den sich in einer Längsrichtung erstreckende Rastflügel angeformt sind, die in radialer Richtung über einen Mittenabschnitt des Fußschaftes überstehen. Der Fußschaft ist mit einem sich in Längsrichtung erstreckenden Schraubenaufnahmeraum ausgebildet, der von einer bis auf die Einführausnehmung geschlossenen Wandung aus einem hartelastischen Kunststoffmaterial umschlossen ist. Außenseitig des Kopftellers ist als Dichtungselement eine umlaufende Dichtlippe aus einem flexiblen Kunststoff vorhanden.

Eine weitere Einsteckmutter ist aus DE 10 2008 012 769 A1 bekannt. Die aus einem hartelastischen Kunststoffmaterial hergestellte vorbekannte Einsteckmutter verfügt über einen Kopfteller, der eine Einführausnehmung aufweist. Weiterhin ist ein an den Kopfteller angeformter länglicher geschlossener Fußschaft vorhanden, der wenigstens eine Rastnase aufweist, die in radialer Richtung über einen Mittenabschnitt des Fußschaftes übersteht, und der mit einem sich in Längsrichtung erstreckenden Schraubenaufnahmeraum ausgebildet ist. Jede Rastnase ist an Flachwandabschnitten angebracht, wobei die Flachwandabschnitte über Balkenwandabschnitte miteinander verbunden sind.

Aus DE 100 14 688 A1 ist eine Einsteckmutter mit einem aus einem hartelastischen Kunststoffmaterial hergestellten Fußschaft und mit einem aus einem weichelastischen Kunststoffmaterial hergestellten Kopfteller bekannt, wobei der Kopfteller einen sich in axialer Richtung zu dem Fußschaft erstreckenden und mit diesem verbundenen Aufweitabschnitt aufweist, der sich bei Eindrehen einer Schraube in einen in dem Fußschaft ausgebildeten Schraubenaufnahmeraum radial nach außen aufweitet und die Einsteckmutter in einem Trägerteil verankert.

Der Erfindung liegt die Aufgabe zugrunde, eine Einsteckmutter der eingangs genannten Art anzugeben, die sich durch eine sehr gute Dichtigkeit und bei relativ geringen Einfügekräften durch einen zuverlässigen Halt in einer noch eingriffsfrei mit einer Schraube in einer in einem Trägerteil eingebrachten Durchsteckausnehmung eingenommenen Vormontageposition auszeichnet.

Diese Aufgabe wird bei einer Einsteckmutter der eingangs genannten Art erfindungsgemäß mit den kennzeichnenden Merkmalen des Patentanspruches 1 gelöst.

Dadurch, dass bei der erfindungsgemäßen Einsteckmutter der Schraubenaufnahmeraum vollständig mit einem Dichtmantel aus einem weichelastischen Material ausgekleidet ist, der jeden in der Rastarmfreimachung liegenden Rastarm hinterfüttert, lassen sich bei verhältnismäßig geringen Einsteckkräften zum Einnehmen einer Vormontageposition durch den oder jeden federnden Rastarm in einer Vormontageposition verhältnismäßig hohe Auszugskräfte erzielen, wobei eine Bewegung des oder jedes Rastarmes radial nach innen durch den dem Dichtmantel gegenüberliegenden Rastarm zusätzlich zu der Federkraft des jeweiligen Rastarmes merklich erschwert ist.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles der Erfindung mit Bezug auf die Figuren der Zeichnung.

Es zeigen:
- Fig. 1: in einer perspektivischen Ansicht ein Ausführungsbeispiel einer erfindungsgemäßen Einsteckmutter,
- Fig. 2: in einer perspektivischen geschnittenen Ansicht das Ausführungsbeispiel gemäß Fig. 1,
- Fig. 3: in einem Längsschnitt das Ausführungsbeispiel gemäß Fig. 1 in einer Zwischenstellung vor dem Einnehmen einer Vormontageposition beim Einfügen in eine in einem Trägerteil ausgebildeten Einfügeausnehmung, und
- Fig. 4: in einem Längsschnitt das Ausführungsbeispiel gemäß Fig. 1 in einer Endmontageposition mit einer zum Befestigen eines Anbauteils an dem Trägerteil eingeschraubten Schraube.

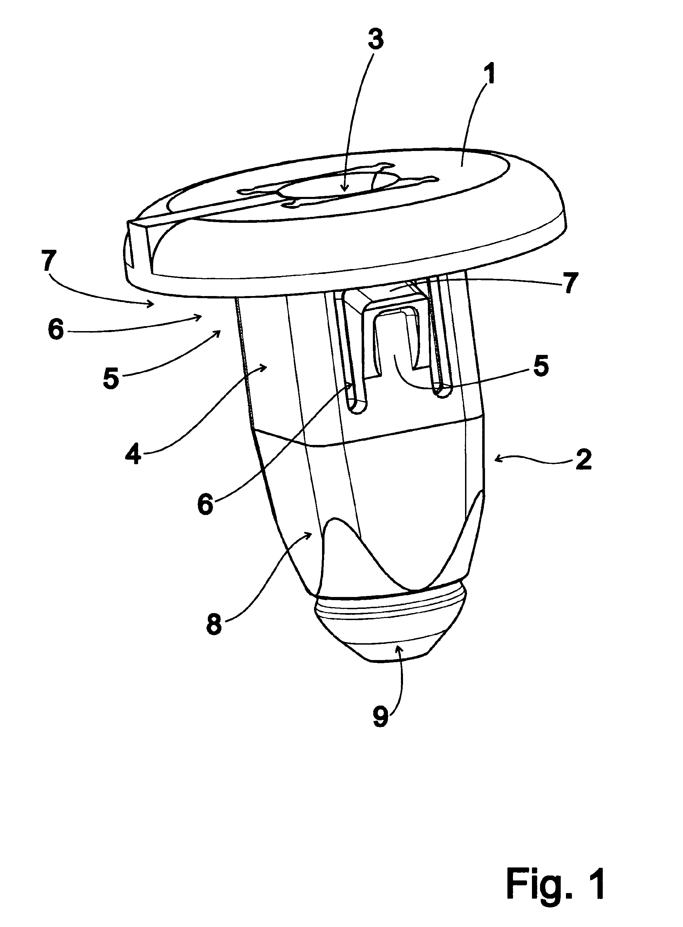

Fig. 1 zeigt in einer perspektivischen Ansicht ein Ausführungsbeispiel einer erfindungsgemäßen Einsteckmutter. Das Ausführungsbeispiel gemäß Fig. 1 verfügt über einen Kopfteller 1 und über einen länglichen Fußschaft 2, der an den in radialer Richtung über den Fußschaft 2 überstehenden Kopfteller 1 angeformt und rechtwinklig zu diesem ausgerichtet ist. Der Kopfteller 2 ist mit einer Einführausnehmung 3 ausgebildet, die auf der Mittellängsachse des Fußschaftes 2 liegt. Der Fußschaft 2 weist einen Mittenabschnitt 4 mit einem eckigen Querschnitt auf, der in Längsrichtung des Fußschaftes 2 im Wesentlichen gleichbleibend ist. An zwei einander gegenüberliegenden Seiten des Mittenabschnittes 4 sind bei diesem Ausführungsbeispiel zwei federnde Rastarme 5 vorhanden, die jeweils in einer in dem Mittenabschnitt 4 ausgebildeten Rastarmfreimachung 6 angeordnet und mit einem Anbindungsende mit dem Mittenabschnitt 4 verbunden sind. An einem dem Anbindungsende gegenüberliegenden freien Ende trägt jeder Rastarm 5 eine Rastnase 7, die in radialer Richtung nach außen über den Mittenabschnitt übersteht und bei dem Ausführungsbeispiel gemäß Fig. 1 dem Kopfteller 1 in einem Abstand gegenüberliegt.

Auf der dem Kopfteller 1 abgewandten Seite des Mittenabschnittes 4 ist der Fußschaft 2 mit einem sich mit zunehmendem Abstand von dem Kopfteller 1 verjüngenden Fußabschnitt 8 ausgebildet, der zu einem Einführende 9 einen gegenüber dem Mittenabschnitt 4 merklich kleineren und am Einführende 9 radialsymmetrischen Querschnitt aufweist.

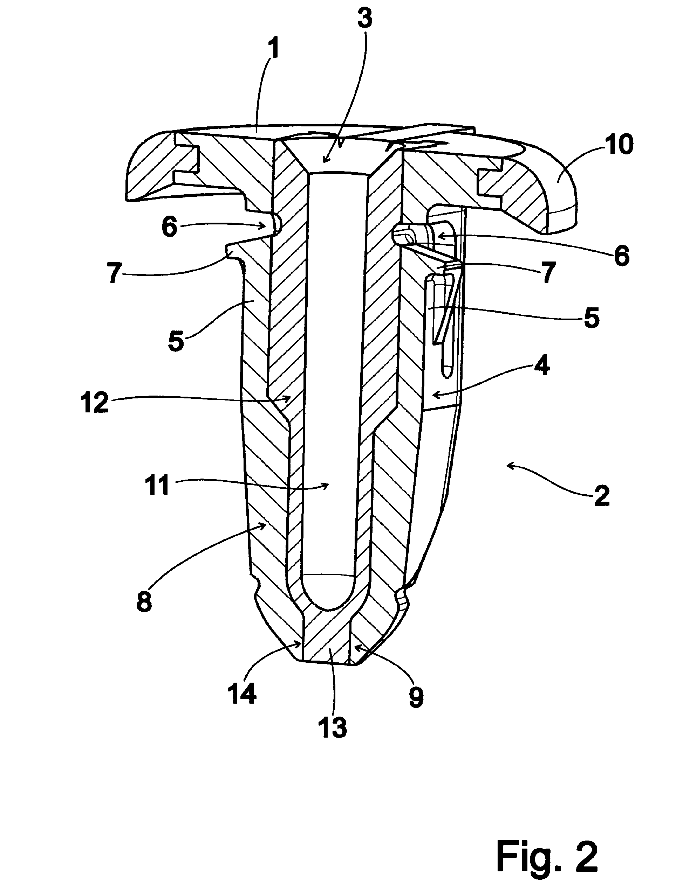

Fig. 2 zeigt in einer geschnittenen perspektivischen Ansicht das Ausführungsbeispiel gemäß Fig. 1. Aus Fig. 2 ist ersichtlicht, dass das dargestellte Ausführungsbeispiel über eine Randschürze 10 aus einem weichelastischen Material verfügt, die sich im Wesentlichen über den gesamten Umfang des Kopftellers 1 erstreckt und in axialer Richtung in Richtung des Fußschaftes 2 über den Kopfteller 1 übersteht. Des weiteren lässt sich der Darstellung gemäß Fig. 2 entnehmen, dass in dem Fußschaft 2 ein sich in Längsrichtung erstreckender Schraubenaufnahmeraum 11 ausgebildet ist, der vollständig von einem Dichtmantel 12 aus einem weichelastischen Material ausgekleidet ist und mit seinem sich über die Längserstreckung des Fußschaftes 2 erstreckenden Abschnitt den Schraubenaufnahmeraum 11 bis auf die Einführausnehmung 3 vollständig umschließt.

Der Dichtmantel 12 erstreckt sich mit einem Kopfabschnitt bis in die Einführausnehmung 3, während an seinem dem Kopfteller 1 abgewandten Ende ein Verfüllzapfen 13 ausgebildet ist, der in einer in dem Einführende 9 des Fußschaftes 2 ausgebildeten Zapfenaufnahme 14 angeordnet ist. Der Dichtmantel 12 weist in seinem sich in Längsrichtung über den Mittenabschnitt 4 hinaus erstreckenden Abschnitt in radialer Richtung eine Materialstärke auf, die deutlich größer als, beispielsweise 2,5 mal so groß wie die Materialstärke im Bereich des Fußabschnittes 8 ist. Die Rastarme 5 sind durch den verhältnismäßig dicken Abschnitt des Dichtmantels 12 hinterlegt, so dass dieser einem Einfedern der Rastarme 5 radial nach innen einen gewissen Widerstand entgegensetzt.

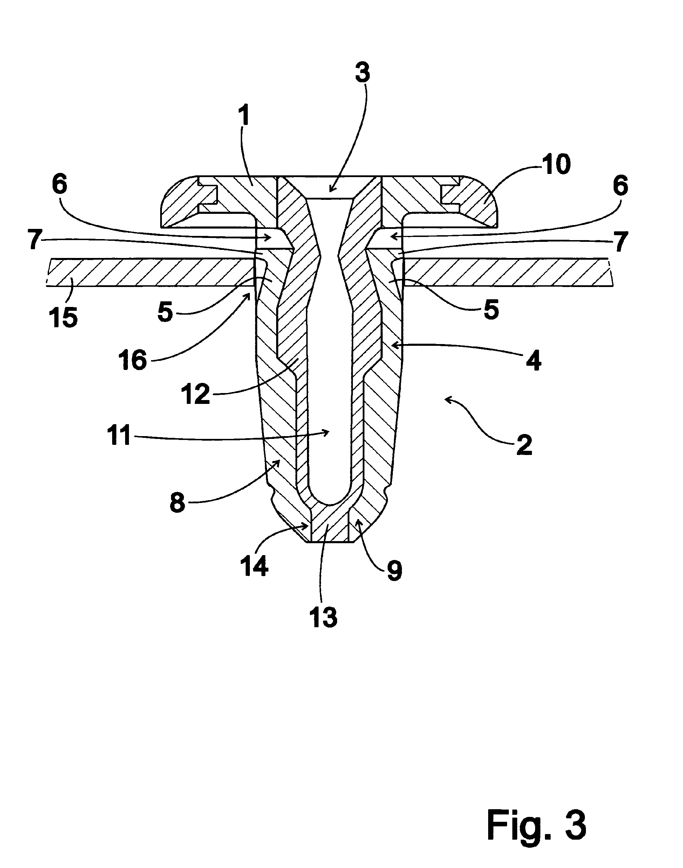

Fig. 3 zeigt das Ausführungsbeispiel gemäß Fig. 1 in einer Zwischenstellung beim Einfügen in eine in einem Trägerteil 15 ausgebildeten Durchsteckausnehmung 16, in der die Rastarme 5 dem Rand der Durchsteckausnehmung 16 gegenüber liegen und in radialer Richtung im Wesentlichen maximal nach innen eingefedert sind. Durch die relativ hohe Elastizität des Materials des Dichtmantels 12 sind jedoch die Einfügekräfte verhältnismäßig gering. Nach Passieren der Rastnasen 7 bis auf die dem Kopfteller 1 abgewandte Unterseite des Trägerteiles 15 federn die Rastnasen 7 unterstützt durch die Elastizität des Materials des Dichtmantels 12 wieder radial nach außen und hintergreifen das Trägerteil 15. In dieser Vormontageposition wirkt die Elastizität des Materials des Dichtmantels 12 einem Einfedern der Rastarme 5 radial nach innen entgegen, so dass sich in Verbindung mit der Rückstellkraft der Rastarme 5 verhältnismäßig hohe Auszugskräfte ergeben.

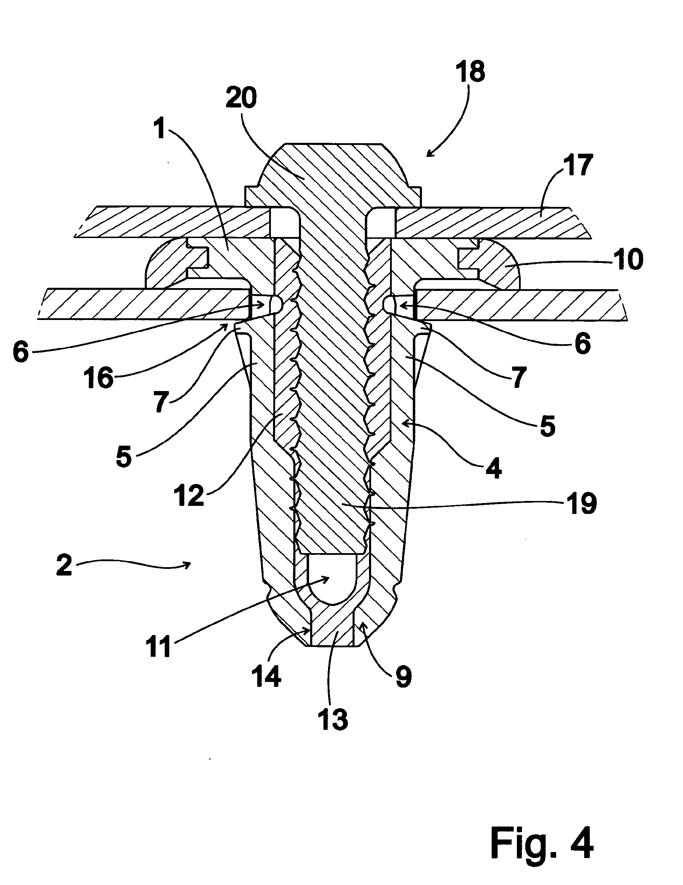

Fig. 4 zeigt in einem Längsschnitt das Ausführungsbeispiel einer erfindungsgemäßen Einsteckmutter gemäß Fig. 1 in einer Endmontageposition, in der zum Befestigen eines Anbauteiles 17 an dem Trägerteil 15 eine Schraube 18 mit ihrem Gewindeschaft 19 bis zum Anliegen des Schraubenkopfes 20 an dem Anbauteil 17 in den Schraubenaufnahmeraum 11 des Fußschaftes 2 eingedreht worden ist, so dass das Anbauteil 17 auf der dem Trägerteil 15 abgewandten Seite des Kopftellers 1 aufliegt. In der Endmontageposition liegt die Randschürze 10 auf der dem Anbauteil 17 zugewandten Seite des Trägerteiles 15 auf und dichtet die Durchsteckausnehmung 16 des Trägerteiles 15 ab. Des weiteren blockiert der Gewindeschaft der Schraube 18 ein Einfedern der Rastarme 5 radial nach innen, wobei sich die Gewindegänge des Gewindeschaftes 19 in den Dichtmantel 12 eingegraben haben. Lediglich in dem in radialer Richtung verhältnismäßig dünnen, in dem Fußabschnitt 8 des Fußschaftes 2 angeordneten Bereich des Dichtmantels 12 haben sich die Gewindegänge des Gewindeschaftes 19 in das Material des Fußschaftes 2 eingegraben, so dass die Einsteckmutter insbesondere im Bereich der Rastarmfreimachungen 6 weiterhin zuverlässig abgedichtet ist.

Falls der Gewindeschaft 19 spitz zulaufend ausgebildet ist, gräbt sich diese Spitze in den Verfüllzapfen 13 ein, ohne jedoch die Dichtigkeit zu beeinträchtigen.

## Patentansprüche

1. Einsteckmutter mit einem eine Einführausnehmung (3) aufweisenden Kopfteller (1) und mit einem an den Kopfteller (1) angeformten länglichen geschlossenen Fußschaft (2), der wenigstens eine Rastnase (7) aufweist, die in radialer Richtung über einen Mittenabschnitt (4) des Fußschaftes (2) übersteht, und der mit einem sich in Längsrichtung erstreckenden Schraubenaufnahmeraum (11) ausgebildet ist, **dadurch gekennzeichnet, dass** die oder jede Rastnase (7) an einem freien Ende eines federnden Rastarmes (5) angebracht ist, der in einer in dem Mittenabschnitt (4) ausgebildeten Rastarmfreimachung (6) angeordnet und mit einem dem freien Ende gegenüberliegenden Anbindungsende mit dem Fußschaft (2) verbunden ist, und dass der Schraubenaufnahmeraum (11) vollständig mit einem Dichtmantel (12) aus einem weichelastischen Material ausgekleidet ist.

2. Einsteckmutter nach Anspruch 1, **dadurch gekennzeichnet, dass** der Dichtmantel (12) an seinem in axialer Richtung dem Kopfteller (1) zugewandten und in radialer Richtung dem oder jedem Rastarm (5) gegenüberliegenden Bereich gegenüber dem dem Kopfteller (1) abgewandten Bereich in radialer Richtung dicker ausgebildet ist.

3. Einsteckmutter nach Anspruch 1 oder Anspruch 2, **dadurch gekennzeichnet, dass** der Dichtmantel (12) an seinem dem Kopfteller (1) abgewandten Ende einen sich in axialer Richtung erstreckenden Verfüllzapfen (13) aufweist, der in einer in dem Fußschaft (2) ausgebildeten Zapfenaufnahme (14) angeordnet ist.

4. Einsteckmutter nach einem der Ansprüche 1 bis 3, **dadurch gekennzeichnet, dass** der Dichtmantel (12) den Schraubenaufnahmeraum (11) bis auf eine in dem Kopfteller (1) ausgebildete Einführausnehmung (3) vollständig auskleidet.

5. Einsteckmutter nach einem der Ansprüche 1 bis 4, **dadurch gekennzeichnet, dass** entlang des Außenrandes des Kopftellers (1) eine Randschürze (10) aus einem weichelastischen Material angeordnet ist, die in radialer Richtung wenigstens auf einer Seite über den Kopfteller (1) übersteht.

## Claims

1. Speed nut comprising a head plate (1) having an insertion recess (3) and comprising an elongate closed foot shaft (2) formed onto the head plate (1), said foot shaft comprising at least one locking nose (7) which projects in the radial direction beyond a central section (4) of the foot shaft (2) and which is configured with a screw receiving space (11) extending in the longitudinal direction, **characterised in that** the or each locking nose (7) is mounted on a free end of a resilient locking arm (5) which is arranged in a locking arm clearance (6) in the central section (4) and is connected to the foot shaft (2) with a binding end opposing the free end, and **in that** the screw receiving space (11) is entirely lined with a sealing coat (12) made of a soft elastic material.

2. Speed nut according to claim 1, **characterised in that** the sealing coat (12) is configured thicker in the radial direction at its region facing toward the head plate (1) in the axial direction and in the radial direction opposing the or each locking arm (5) as compared with the region facing away from the head plate (1).

3. Speed nut according to claim 1 or claim 2, **characterised in that** the sealing coat (12) has a filling spigot (13) extending in the axial direction at its end facing away from the head plate (1), said filling spigot being arranged in a spigot receptacle (14) provided in the foot shaft (2).

4. Speed nut according to one of the claims 1 to 3, **characterised in that** the sealing coat (12) entirely fills the screw receiving space (11) except for an insertion recess (3) provided in the head plate (1).

5. Speed nut according to one of the claims 1 to 4, **characterised in that** arranged along the outer edge of the head plate (1) is an edge cover (10) made of a soft elastic material which projects beyond the head plate (1) in the radial direction at least on one side.

## Revendications

1. Ecrou à encastrer comprenant une collerette d'appui formant tête (1) comportant un évidement d'introduction (3) et comprenant une tige d'ancrage en position monobloc de grande longueur (2), réalisée solidaire par moulage de la collerette d'appui formant tête (1), qui est munie d'au-moins un ergot d'accrochage (7) lequel fait saillie dans le plan radial au-dessus de la portion centrale (4) de la tige d'ancrage en position (2) et qui comporte un espace de réception d'une vis (11) s'étendant dans le sens longitudinal, **caractérisé en ce que** l'ergot ou chaque ergot d'accrochage (7) est disposé à l'extrémité libre d'une patte de mise en prise d'encastrement (5) capable de réagir élastiquement, qui est disposée dans un dégagement d'insertion de patte de mise en prise d'encastrement (6) ménagé dans la portion centrale (4) et qui est raccordée avec la tige d'ancrage en position (2) par une extrémité de liaison située à l'opposé de l'extrémité libre, et **en ce que** l'espace de réception d'une vis (11) est intégralement revêtu d'un garnissage d'étanchéité (12) réalisé dans une matière à cèdage élastique facile.

2. Ecrou à encastrer selon la revendication 1, **caractérisé en ce que** le garnissage d'étanchéité (12) présente, au niveau de sa portion, orientée dans le plan axial vers la collerette d'appui formant tête (1) et dans le plan radial située opposée à ou à chaque patte de mise en prise d'encastrement (5), une plus forte épaisseur dans le plan radial par rapport à sa portion orientée à l'opposé de la collerette d'appui formant tête (1).

3. Ecrou à encastrer selon la revendication 1 ou la revendication 2, **caractérisé en ce que** le garnissage d'étanchéité (12) comporte, au niveau de son extrémité orientée à l'opposé de la collerette d'appui formant tête (1), un téton de fermeture d'extrémité (13) s'étendant dans le plan axial, qui est disposé dans un logement de réception pour téton (14) ménagé dans la tige d'ancrage en position (2).

4. Ecrou à encastrer selon l'une des revendications 1 à 3, **caractérisé en ce que** le garnissage d'étanchéité (12) remplit complètement l'espace de réception de vis (11) à l'exception d'un évidement d'introduction (3) ménagé dans la collerette d'appui formant tête (1).

5. Ecrou à encastrer selon l'une des revendications 1 à 4, **caractérisé en ce qu'**il est prévu, le long du bord extérieur de la collerette d'appui formant tête (1), un tablier de protection de rive (10) réalisé dans une matière à cèdage élastique facile qui, dans le plan radial, fait saillie au moins sur un côté au-dessus de la collerette d'appui formant tête (1).
